## Europäisches Patentamt
## European Patent Office
## Office européen des brevets

(19)

(11) Numéro de publication: **0 006 049**
**B1**

(12) **FASCICULE DE BREVET EUROPEEN**

(45) Date de publication du fascicule du brevet: 06.04.83

(51) Int. Cl.³: **C 08 L 23/02, C 08 K 3/22, C 08 J 5/18, B 65 D 65/16**

(21) Numéro de dépôt: 79400321.0

(22) Date de dépôt: 22.05.79

(54) **Film transparent et son application à l'emballage de produits susceptibles d'être détériorés par le rayonnement ultra-violet.**

(30) Priorité: 31.05.78 FR 7816276

(43) Date de publication de la demande:
12.12.79 Bulletin 79/25

(45) Mention de la délivrance du brevet:
06.04.83 Bulletin 83/14

(84) Etats contractants désignés:
AT BE CH DE GB IT LU NL SE

(56) Documents cités:
CH - A - 414 451
DE - A - 1 494 993
DE - A - 2 346 877
GB - A - 617 431

(73) Titulaire: **Société Chimique des Charbonnages
Tour Aurore Place des Reflets Cédex no 5
F-92080 Paris La Défense 2 (FR)**

(72) Inventeur: **Hilt, Edmond
Résidence Buridant C.67 150, Avenue Maes
F-62300 Lens (FR)** .

(74) Mandataire: **Dubost, Thierry
Société Chimique des Charbonnages Service
Propriété Industrielle B.P. No 1
F-62160 Bully Les Mines (FR)**

Courier Press, Leamington Spa, England.

# 0 006 049

**Film transparent et son application à l'emballage de produits susceptibles d'être détériorés par le rayonnement ultra-violet**

La présente invention se rapporte à un film transparent de polyoléfine et à son application à l'emballage de produits susceptibles d'être détériorés par le rayonnement ultra-violet.

On sait que de très nombreux produits tant synthétiques (matières plastiques) que naturels (papier, carton, laine, eau, etc...) voient certaines de leurs propriétés dégradées après une longue exposition aux agents atmosphériques et notamment à la composante ultra-violette du rayonnement solaire. Ce phénomène est très répandu du fait du stockage de ces produits dans des lieux soumis aux agents atmosphériques, dit stockage extérieur. Il a pour conséquence la dévalorisation des produits ainsi stockés, pouvant aller jusqu'à la perte de leur valeur commerciale lorsque la durée de stockage est particulièrement longue. Les propriétés dégradées par l'exposition au rayonnement ultra-violet varient selon les produits. Pour un produit naturel peint (papier, carton, laine), on observe une dégradation de la couleur. Pour une matière plastique, on observe une altération de plusieurs propriétés physico-chimiques et l'apparition d'odeurs désagréables. Lorsque la matière plastique se présente sous forme de granulés, l'altération de ses propriétés est la cause de difficultés pour transformer ladite matière plastique en objets finis tels que films, tuyaux, profilés, etc.

Pour résoudre le problème de l'exposition au rayonnement ultra-violet de produits susceptibles d'être détériorés par ledit rayonnement, il a été proposé d'emballer lesdits produits sous des films ou des housses fabriquées à partir d'une polyoléfine à laquelle est incorporé soit du noir de carbone soit de l'oxyde de titane. On connait aussi le brevet DE—A—1.494.993 décrivant une matière plastique pour la fabrication de récipients d'huile minérale, telle que la transmission lumineuse à travers une couche de 0,5 mm d'épaisseur ne dépasse pas 0,2% pour les longueurs d'onde inférieures à 400 m$\mu$ (domaine ultra-violet) et 15% pour les longueurs d'onde du domaine visible, cette matière plastique pouvant comporter de l'oxyde de zinc. Ces différentes solutions ne font que retarder l'altération des propriétés des produits ainsi emballés et présentent l'inconvénient que les films ou les housses d'emballages sont colorés en noir ou en blanc et ne permettent pas d'observer le produit contenu dans l'emballage.

D'autre part, l'incorporation d'oxyde de zinc dans des films ou des housses constituées de polyoléfines pour en améliorer la durabilité vis-à-vis du rayonnement ultra-violet exige une quantité importante d'oxyde de zinc en fonction de l'épaisseur de la housse.

Un premier objet de la présente invention est donc de proposer un film de polyoléfine transparent et capable de protéger des produits exposés au rayonnement ultra-violet.

Un second objet de la présente invention consiste en l'application d'un tel film à l'emballage de produits susceptibles d'être détériorés par le rayonnement ultra-violet de telle manière que les propriétés desdits produits soient conservées aussi constantes que possible pendant leur stockage et que les produits restent visibles de l'extérieur.

Le film selon l'invention est un film de polyoléfine dans lequel de l'oxyde de zinc est incorporé à ladite polyoléfine en proportion telle que le produit de ladite proportion en poids (exprimée en pourcentage) dans la polyoléfine par l'épaisseur du film (exprimée en millimètres) soit compris entre 0,2 et 0,9. Le film selon l'invention est appliqué au stockage sous emballage transparent de produits susceptibles d'être détériorés par le rayonnement ultra-violet et consiste à emballer lesdits produits sous un tel film de manière à conserver leurs propriétés pendant le stockage.

Par produits au sens de la présente invention on entend d'une part des produits naturels tels que eau, carton, papier, laine, etc., d'autre part des produits synthétiques tels que par exemple les matières plastiques suivantes: polyéthylène, polypropylène, polybutène-1, polychlorure de vinyle, polyacétals, polycarbonates, polystyrène, polyesters, polyméthylméthacrylate, polytétrafluoroéthylène, polybutadiène, polyisoprène, polynorbornène, etc. et les mélanges de ces matières plastiques entr'elles. Par polyoléfine au sens de la présente invention on entend le polyéthylène, le polypropylène, le polybutène-1, les copolymères des $\alpha$-oléfines entr'elles, les copolymères éthylène-acétate de vinyle et éthylène-anhydride maléique et les mélanges de ces polyoléfines entr'elles.

On ne sortira pas du cadre de la présente invention en incorporant, outre l'oxyde de zinc dans la quantité prévue, d'autres composés chimiques à la polyoléfine à partir de laquelle est fabriquée la housse d'emballage. Ces composés chimiques pourront être soit des absorbeurs connus de rayonnement ultraviolet tels que les benzophénones substitués, des phénylbenzotriazoles substitués ou des amines à empêchement stérique, soit des extincteurs tels que des complexes de nickel. Ces composés pourront être également des antioxydants connus tels que des phénols à empêchement stérique, des mercaptans ou des phosphites.

Pour des raions de commodité on peut emballer, sous les housses du procédé selon l'invention, non pas directement les produits eux-mêmes mais des sacs les contenant.

Le procédé selon l'invention présente de nombreux avantages:

— dans la limite des quantités d'oxyde de zinc précisées ci-dessus, les produits emballés sous la housse sont facilement visibles de l'extérieur, ce qui n'était pas le cas des housses dans lesquelles est incorporé du noir de carbone ou de l'oxyde de titane,

2

**0 006 049**

— les propriétés des produits emballés sous la housse sont conservées constantes pendant une longue durée.

— l'apparition des mauvaises odeurs liée à la dégradation des produits est supprimée.

Les exemples suivants ont pour objet d'illustrer les avantages de l'invention sans en limiter la portée.

Exemples 1 et 2

On considère des granulés de polyéthylène ayant, au moment de leur fabrication, une masse volumique $p$ (mesurée à 23°C sur des échantillons recuits pendant une heure à 150°C et refroidis à raison de 50°C/heure) égale à 0,9220 g/cm3 et un indice de fluidité IF (mesuré selon la norme ASTM —D 1238—73) égal à 0,25 g/10 mn.

Ces granulés sont emballés sous une housse d'épaisseur 150 microns. La housse de l'exemple 1 (comparatif) a été fabriquée à partir des mèmes granulés que ceux qu'elle emballe et sans incorporer d'additif. La housse de l'exemple 2 a été fabriquée à partir d'un mélange du même polyéthylène et de 2% en poide d'oxyde de zinc de granulométrie moyenne égale à 0,1 micron (l'épaisseur d'oxyde de zinc'' dans la housse est donc de 0,3 centième de millimètre).

Les deux housses remplies de granulés sont stockées côte à côte dans un lieu soumis aux agents atmosphériques, notamment le rayonnement solaire. On prélève périodiquement dans chaque housse des granulés dont on messure, selon les méthodes exposées ci-dessus, l'indice de fluidité et la masse volumique. Les résultats de ces mesures sont consignés dans le Tableau I.

TABLEAU I

| Durée de stockage (mois) | Exemple 1 | | Exemple 2 | |
|---|---|---|---|---|
| | $p$ | IF | $p$ | IF |
| 2 | 0,9220 | 0,03 | 0,9220 | 0,25 |
| 4 | 0,9228 | 0 | 0,9220 | 0,25 |
| 6 | 0,9240 | 0 | 0,9220 | 0,25 |
| 10 | 0,9250 | 0 | 0,9220 | 0,24 |
| 18 | 0,9275 | 0 | 0,9220 | 0,24 |

Exemples 3 et 4

On considère les mèmes granulés de polyéthylène qu'aux exemples 1 et 2. Ces granulés sont d'abord placés dans des sachets fabriqués à partir du mème polyéthylène que les granulés qu'ils contiennent et sans incorporer d'additif. Ces sachets sont emballés sous une housse d'épaisseur 150 microns.

La housse de l'exemple 3 (comparatif) a été fabriquée, selon une technique antérieurement connue, à partir d'un mélange du même polyéthylène et de 1% en poids d'oxyde de titane; cette housse est de couleur blanche et ne permet pas de voir les sachets contenus à l'intérieur.

La housse de l'exemple 4 a été fabriquée à partir d'un mélange du même polyéthylène et de 2,5% en poids d'oxyde de zinc de granulométrie moyenne égale à 0,1 micron (l'épaisseur d'oxyde de zinc'' dans la housse est donc de 0,375 centième de millimètre).

Les deux housses remplies de granulés sont stockées côte à côte dans un lieu soumis aux agents atmosphériques, notamment le rayonnement solaire. On prélève périodiquement dans chaque housse des granulés dont on mesure l'indice de fluidité selon la norme ASTM—D 1238—73. Les résultats de ces mesures sont consignés dans le Tableau II.

TABLEAU II

| Durée de stockage (mois) | Exemple 3 IF | Exemple 4 IF |
|---|---|---|
| 2 | 0,21 | 0,25 |
| 4 | 0,19 | 0,25 |
| 8 | 0,16 | 0,25 |

Exemple 5

On fabrique une housse d'épaisseur 200 microns pour emballage de granulés à partir d'un mélange du polyéthylène décrit à l'exemple 1 et de 1% en poids d'oxyde de zinc de granulométrie moyenne égale à 0,1 micron. L'"épaisseur d'oxyde de zinc" dans la housse est donc de 0,2 centième de millimètre. Au moyen d'un spectrophotomètre équipé d'une sphère d'intégration, on mesure la trans-

3

**0 006 049**

mission du mélange dans la gamme de longueurs d'onde entre 260 et 360 nm. La valeur trouvée pour cette transmission est de 4%.

Exemples 6 et 7

On fabrique des housses d'épaisseur 150 microns pour emballage de granulés à partir de mélanges de polyéthylène et d'oxyde de zinc. Le polyéthylène et l'oxyde de zinc sont les mêmes que ceux utilisés aux exemples précédents. Les quantités d'oxyde de zinc dans le polyéthylène sont respectivement de 2% en poids pour l'exemple 6 et de 4% en poids pour l'exemple 7 ce qui correspond à des épaisseurs d'oxyde de zinc dans la housse de 0,3 et 0,6 centième de millimètre. A l'oeil nu, les deux housses laissent bien voir les granulés ou sachets de granulés qu'elles servent à emballer. Dans le but de quantifier cette observation, on mesure la transmission des mélanges dans le domaine visible aux longueurs d'onde 450 et 700 nm, en utilisant pour cela un spectrophotomètre équipé d'une sphère d'intégration. Les résultats de ces mesures sont consignés dans le tableau III.

TABLEAU III

| Exemple | % transmission (450 nm) | % transmission (700 nm) |
|---------|-------------------------|-------------------------|
| 6 | 63 | 77 |
| 7 | 53 | 70 |

Exemples 8 (comparatif) et 9

On considère d'une part la housse de l'exemple 1 et d'autre part une housse de même épaisseur (150 microns) fabriquée à partir d'un mélange du même polyéthylène et de 3% en poids d'oxyde de zinc de granulométrie moyenne égale à 0,1 micron (1'"épaisseur d'oxyde de zinc" dans la housse est donc de 0,45 centième de millimètre).

Les deux housses sont employées pour emballer des échantillons de carton bleu et sont placées côte à côte dans un lieu soumis aux agents atmosphériques, notamment le rayonnement solaire. On prélève dans chaque housse à différentes époques du stockage, un échantillon de carton dont on mesure la réflectance avec filtre bleu à l'aide d'un appareil "colormaster" de la société Manufactures Engineering & Equipment Corp. (Etats-Unis), ladite réflectance étant exprimée en pourcentage. L'exemple 8, correspondant à l'emploi de la housse de l'exemple 1, est comparatif tandis que l'exemple 9 est conforme à l'invention. Les résultats des mesures sont consignés dans le tableau IV.

TABLEAU IV

| Durée de stockage (mois) | Exemple 8 | Exemple 9 |
|--------------------------|-----------|-----------|
| 0 | 60,0 | 60,0 |
| 2 | 55,8 | 60,0 |
| 10 | 54,8 | 60,0 |

**Revendications**

1. Film de polyoléfine contenant de l'oxyde de zinc, caractérisé en ce que afin de rendre transparent ledit film, l'oxyde de zinc est incorporé à ladite polyoléfine, en proportion telle que le produit du pourcentage en poids d'oxyde de zinc par l'épaisseur du film (exprimée en millimètres) soit compris entre 0,2 et 0,9.

2. Film selon la revendication 1, caractérisé en ce que la polyoléfine est choisie parmi le polyéthylène, le polypropylène, le polybutène-1, les copolymères des $\alpha$-oléfines entr'elles, les copolymères éthylène-acétate de vinyl et éthylène-anhydride maléique et leurs mélanges.

3. Film selon l'une des revendications 1 et 2, caractérisé en ce que au moins un absorbeur de rayonnement ultra-violet est incorporé à la polyoléfine.

4. Film selon la revendication 3, caractérisé en ce que ledit absorbeur de rayonnement ultra-violet est choisi parmi les benzophénones substituées, les phénylbenzotriazoles substitués et les amines à empêchement stérique.

5. Film selon l'une des revendications 1 à 4, caractérisé en ce qu'au moins un antioxydant est incorporé à la polyoléfine.

6. Film selon la revendication 5, caractérisé en ce que ledit antioxydant est choisi parmi les phénols à empêchement stérique, les mercaptans et les phosphites.

7. Application d'un film selon l'une des revendications 1 à 6 au stockage sous emballage transparent de produits susceptibles d'être détériorés par le rayonnement ultra-violet, caractérisée en ce qu'on emballe lesdits produits sous un tel film de manière à conserver leurs propriétés constantes pendant le stockage.

8. Application selon la revendication 7, caractérisée en ce que la matière constituant les produits soumis au stockage est choisie parmi le polyéthylène, le polypropylène, le polybutène-1 le polychlorure de vinyle, les polyacétals, les polycarbonates, le polystyrène, les polyesters, le polyméthylméthacrylate, le polytétrafluoroéthylène, le polybutadiène, le polyisoprène, le polynorbornène et leurs mélanges.

9. Application selon la revendication 7, caractérisée en ce que la matière constituant les produits soumis au stockage est choisie parmi le papier, le carton et la laine.

### Patentansprüche

1. Polyolefinfilm enthaltend Zinkoxyd, dadurch gekennzeichnet, daß, um dem Film Transparenz zu verleihen, das Zinkoxyd dem Polyolefin zu einem solchen Anteil einverleibt ist, daß das Produkt aus Gewichtsprozenten des Zinkoxyds und der Dicke des Films (in mm) zwischen 0,2 und 0,9 leigt.

2. Film nach Anspruch 1, dadurch gekennzeichnet, daß das Polyolefin ausgewählt ist aus der Gruppe bestehend aus Polyäthylen, Polypropylen, Polybuten-1, den Copolymeren von $\alpha$-Olefin untereinander, den Äthylen-Vinylacetat-Copolymeren und den Äthylen-Maleinsäureanhydrid-Copolymeren und Mischungen daraus.

3. Film nach einem der Ansprüche 1 und 2, dadurch gekennzeichnet, daß dem Polyolefin mindestens ein Ultraviolettstrahlenabsorber einverleibt ist.

4. Film nach Anspruch 3, dadurch gekennzeichnet, daß dieser Ultraviolettstrahlenabsorber ausgewählt ist aus der Gruppe bestehend aus den substituierten Benzophenonen, den substituierten Phenylbenzotriazolen und den sterisch gehinderten Aminen.

5. Film nach einem der Ansprüche 1 bis 4, dadurch gekennzeichnet, daß dem Polyolefin zumindest ein Antioxydationsmittel einverleibt ist.

6. Film nach Anspruch 5, dadurch gekennzeichnet, daß das Antioxydationsmittel ausgewählt ist aus der Gruppe bestehend aus sterisch gehinderten Phenolen, Merkaptanen und Phosphiten.

7. Verwendung eines Filmes nach einem der Ansprüche 1 bis 6 für die Lagerung von Produkten in transparenten Hüllen, welche Produkte durch ultraviolette Strahlung beschädigt werden können, dadurch gekennzeichnet, daß man diese Produkte in den Film verpackt, um deren Eigenschaften während der Lagerung aufrechtzuerhalten.

8. Verwendung nach Anspruch 7, dadurch gekennzeichnet, daß das die für die Lagerung bestimmten Produkte bildende Material ausgewählt ist aus der Gruppe Polyäthylen, Polypropylen, Polybuten-1, Polyvinylchlorid, Polyacetate, Polycarbonate, Polystyrol, Polyester, Polymethylmethacrylat, Polytetrafluoräthylen, Polybutadien, Polyisopren, Polynorbornen und Mischungen daraus.

9. Verwendung nach Anspruch 7, dadurch gekennzeichnet, daß das die für die Lagerung bestimmten Produkte bildende Material ausgewählt ist aus der Gruppe Papier, Karton und Wolle.

### Claims

1. A polyolefin film containing zinc oxide, characterized in that in order to render the said film transparent, zinc oxide is incorporated into the said polyolefin in an amount such that the product of the percentage by weight of the zinc oxide times the thickness of the film in millimeters is between 0.2 and 0.9.

2. A film according to claim 1, characterized in that the polyolefin is selected from polyethylene, polypropylene, 1-polybutene, copolymers of the $\alpha$-olefins together, ethylene-vinylacetate and ethylene-maleic anhydride copolymers and mixtures thereof.

3. A film according to any of claims 1 and 2, characterized in that there is incorporated at least one ultraviolet radiation absorber in the polyolefin.

4. A film according to claim 3, characterized in that said ultraviolet radiation absorber is selected from substituted benzophenones, substituted phenylbenzotriazoles, and amines with steric hindrance.

5. A film according to any of claims 1 to 4, characterized in that there is incorporated at least one anti-oxidant in the polyolefin.

6. A film according to claim 5, characterized in that said anti-oxidant is selected from phenols with steric hindrance, mercaptans and phosphites.

7. Application of a film according to any of claims 1 to 6 to the storage, under transparent cover, of articles that can be damaged by ultraviolet radiation, characterized in that the said articles are covered under such a film in order to maintain their properties constant during storage.

8. Application according to claim 7, characterized in that the articles to be stored are made from a material selected from polyethylene, polypropylene, 1-polybutene, polyvinyl chloride, polyacetals, polycarbonates, polystyrene, polyesters, polymethylmethacrylate, polytetrafluoroethylene, polybutadiene, polyisoprene, polynorbornene and blends thereof.

9. Application according to claim 7, characterized in that the articles to be stored are made from a material selected from paper, cardboard and wool.

5